Europäisches Patentamt

(19) European Patent Office

Office européen des brevets

(11) Publication number: **0 142 247**
**A1**

(12) # EUROPEAN PATENT APPLICATION

(21) Application number: **84306317.3**

(22) Date of filing: **14.09.84**

(51) Int. Cl.⁴: **F 02 K 9/10**

(30) Priority: **16.09.83 GB 8324900**

(43) Date of publication of application:
**22.05.85 Bulletin 85/21**

(84) Designated Contracting States:
**IT**

(71) Applicant: **The Secretary of State for Defence in Her Britannic Majesty's Government of The United Kingdom of Great Britain and Northern Ireland Whitehall London SW1A 2HB(GB)**

(72) Inventor: **Penny, Peter David**
**31 Ellesmere Crescent**
**Brackley Northamptonshire NN13 6BP(GB)**

(74) Representative: **McCormack, Derek James et al, c/o Patents and Licensing Department Royal Ordnance plc Griffin House PO Box 288 The Strand London WC2N 5BB(GB)**

(54) **Rocket motor with two different charges.**

(57) A rocket motor incorporating a boost phase solid propellant and a sustain phase solid propellant, the boost phase propellant comprising a plurality of propellant sticks (21, 21a) of snowflake cross-section, the sustain phase propellant comprising a plurality of propellant tubes (20) and the tubes and sticks inter-fitting one with another and extending axially of the motor.

Fig.2.

EP 0 142 247 A1

IMPROVEMENTS IN OR RELATING TO ROCKET MOTORS

The present invention relates to solid propellant rocket motors, and in particular relates to such motors in man-portable missiles.

One disadvantage of known rocket motors consisting of a boost propellant stage and a sustain propellant stage arranged in serial alignment is that they require large volume combustion chambers to accommodate both stages. This results in bulky rocket motors which are a particular disadvantage in man-portable rockets, where it is essential to keep rocket volume to a minimum in order to facilitate the carrying and handling of the rocket and in order to enable the user of the rocket to fire it from a correspondingly small launcher.

The present invention seeks to overcome this disadvantage by providing a two-stage rocket motor whereby the boost and sustain propellant stages are arranged in parallel rather than serial alignment.

Accordingly, the present invention provides a rocket motor comprising a combustion chamber, an exhaust nozzle situated at one end of the combustion chamber and, disposed within the chamber, a solid rocket propellant boost phase charge and a solid rocket propellant sustain phase charge, wherein the boost phase charge and the sustain phase charge each comprises a plurality of propellant sticks each interfitting one with another and each stick extending axially along the length of the chamber towards the nozzle, and further wherein the boost propellant sticks are each of thin web and high ratio of surface area to propellant volume by comparison with the sustain propellant sticks.

In operation of the rocket motor, the boost phase charge and the sustain phase charge are ignited simultaneously, and the boost charge burns out comparatively rapidly whilst accelerating the rocket from stationary to an interim velocity. The sustain phase charge, whilst having assisted in the boost, continues to burn to accelerate the rocket to maximum velocity.

The sustain propellant sticks comprising the sustain phase charge preferably comprise tubular sticks, and most preferably, each of the tubular sustain propellant sticks has disposed therein a boost propellant stick in order to make maximum possible use of the space available within the combustion chamber.

There is a risk that a rapid depressurisation within the combustion chamber associated with the completion of the boost phase charge may bring about the extinction of the sustain phase charge. This problem may be solved by providing for a staged or extended depressurisation in the combustion chamber. The present inventor has found that this may be achieved by either one of the following modifications to the design of the boost phase charge:

(a)  at least one of the boost propellant sticks may be of thicker web than the remaining boost propellant sticks, or

(b)  the burning rate of the boost propellant within at least two of the boost propellant sticks may be different at any given pressure within the combustion chamber.

In order to achieve a thin web and high ratio of surface area to propellant volume in the shape of the boost propellant sticks, the sticks preferably comprise a plurality of solid vanes of boost propellant extending radially from the longitudinal axis of each stick. The number of vanes per stick is preferably six, giving each stick a snowflake-shaped cross section.

Where the sustain phase charge comprises tubular propellant sticks, in order to minimise the risk of charge disintegration towards the end of the sustain phase, the flow areas inside and outside the tubes are preferably equalised, following the formula:

$$\bar{R}_s^2 = \frac{R_t^2}{2N_s}$$

where $\bar{R}_s$ is the mean charge radius

$R_t$ is the case radius, and

$N_s$ is the number of sticks.

The invention affords the advantage over known rocket motors of minimising the bulk, especially the cross sectional

0142247

3

area, and the proportion of all up weight given over to propellant, in a solid fuel rocket.

A rocket having a motor in accordance with the invention will now be described by way of example with reference to the accompanying drawings, of which:

Figure 1 is a longitudinal section of a rocket having a sustain motor charge of tubular propellant sticks,

Figure 2 is a cross section at II-II in Figure 1, and

Figure 3 is a cross section at II-II of the rocket illustrated in Figure 1 but having a sustain motor charge of solid cylindrical rather than tubular propellant sticks.

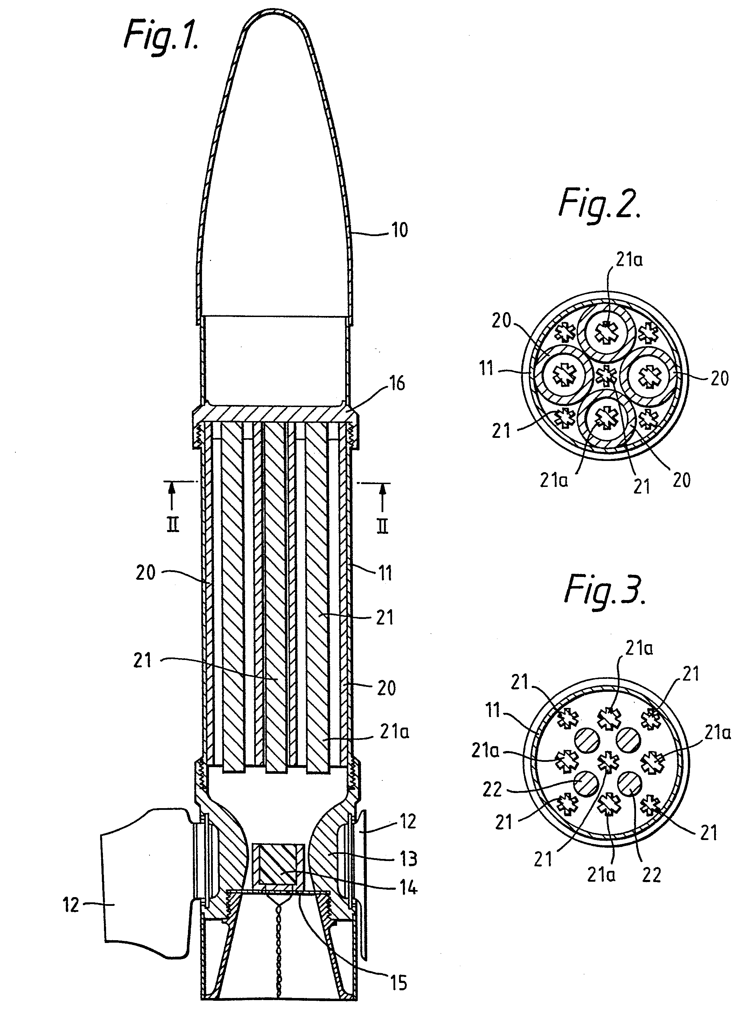

The rocket shown in Figure 1 has a nose cone, a fuselage 11 carrying fins 12 and containing a rocket motor. The motor comprises a combustion chamber containing propellant, an exhaust nozzle 13 and, within the nozzle, an igniter assembly 10 and a burster disc 15. The combustion chamber includes a motor head end 16.

As shown more clearly in Figure 2, the propellant in the combustion chamber comprises four tubes 20 of sustain phase solid propellant and nine sticks 21 of boost phase solid propellant. These extend axially of the motor and interfit one another, with each tube 20 containing one stick 21a and the remaining sticks 21 occupying spaces between the tubes. The sticks 21 are of snowflake cross section, to maximise their external surface. The four sticks 21a have a thicker web than the remaining five. The tubes 20 and the sticks 21 are attached to the head end 16 with an adhesive.

An alternative embodiment of the present invention is shown in Figure 3, where in place of the four tubes 20 of sustain phase propellant as shown in Figures 1 and 2 there are four solid cylinders 22 of sustain phase propellant. These four cylinders 22, each having a thicker web and lower ratio of surface area to propellant volume than the boost phase propellant sticks 21, 21a, again extend axially of the motor and interfit with the boost propellant sticks. This particular configuration of sustain propellant sticks 22 is useful where an especially long sustain phase charge burning time is required, the web of a solid cylinder being thicker than that of a tube for a given propellant volum and stick length.

Detailed construction will now be described for a rocket as illustrated in Figures 1 and 2 having the following specification:

| | |
|---|---|
| Boost eject velocity | 150 m/s |
| Final velocity | 330 m/s in 100 m |
| Launcher length | 1.5 m |
| All up mass | 5 kg |
| Outside diameter | 103 mm |

The velocity increment ( V) provided by the boost phase may be calculated from Tsiolkowski's equation.

$$V = I_{sp} . \ln (M_i/M_f)$$

where $I_{sp}$ is specific impulse

$M_i$ is the initial mass and $M_f$ is the final mass.

Assuming a specific impulse of 2200 Ns/kg, a ratio of initial to final mass of 1.07 is required to achieve the desired velocity.

Thus the propellant mass required ($M_p$) is given by

$$M_p = 0.071 (M_L + MI)$$

where $M_L$ is the payload mass and MI is the inert mass,

or $$M_p = \frac{M_{TOT}}{15.183}$$

where $M_{TOT}$ is the all up mass.

The assumed all up mass and velocity increment therefore requires about 0.33 kg of propulsive mass. A similar calculation for the sustain phase yields a propulsive mass requirement of 0.46 kg.

To accelerate an object from rest to 150 m/s in 1.2 m (80% of the actual launch length) requires a mean acceleration of 9375 m/sec$^2$. Assuming a mean vehicle mass of 4.84 kg (half of boost propellant consumed), this yields a boost thrust requirement of 45.3 kN for 16 msec.

For the sustain phase, to accelerate a mean vehicle mass of 4.44 kg from 150 m/s to 330 m/s in 100 m requires a thrust of 1.9 kN acting for 0.42 secs.

To produce a high thrust for a short time a fast burning Extruded Double Base (EDB) propellant is a suitable boost propellant. To provide a relatively long sustain burn at low pressure a slow burning EDB propellant is used as the sustain propellant. Details of the two propellants are shown below:

| | Boost Propellant (B) | Sustain Propellant (S) |
|---|---|---|
| Burning rate ($b$) | 47 mm/sec @ 27 MPa ($P_B$) | 34 mm/sec @ 27 MPa ($P_s$) & 5 mm/sec @ 2 MPa ($P_s$) |
| C* | 1450 m/s | 1400 m/s |
| Density $\rho$ | 1650 kg/m$^3$ | 1620 kg/m$^3$ |

Given a boost operating pressure of 27 MPa, and assuming a nozzle efficiency of 0.95 giving an optimum area ratio of 4.34 requiring a throat diameter of 37.3 mm and an exit diameter of 77.8 mm, the total propulsive mass is 0.79 kg and the sustain operating pressure 1.4 MPa.

The sustain propellant burning surface area $(AS)_s$ is calculated from

$$(AS)_s = \frac{P_s \cdot A_T}{b_s \cdot (C^*)_s \cdot \rho_s}$$

where $b$ is the burning rate

$\rho$ is the density

and $C^*$ is the characteristic exhaust velocity.

The boost propellant burning surface $(AS)_B$ is then estimated using

$$(AS)_B = \frac{P_B \cdot A_T - b_s (AS)_s \rho_s \cdot (C^*)_s}{b_B \cdot \rho_B \cdot (C^*)_B}$$

From the assumed performance and propellant composition this gives

$$(AS)_s = 0.168 \text{ m}^2$$

$$(AS)_B = 0.149 \text{ m}^2$$

6

In order to minimise the risk of charge disintegration near to the end of the sustain burn, the flow areas inside and outside the tubes 20 have been equalised.

For equal flow areas:

$$\bar{R}_s^2 = \frac{R_t^2}{2 N_s}$$

where $\bar{R}_s$ is the mean charge radius

$R_t$ the case radius

Ns the number of tubes.

Studies of varying numbers of tubes indicated that four provided the correct burning surface area with reasonable length and sufficient space to install the boost charge. The sustain charge dimensions are therefore:

$(Ro)_s$    17.85 mm    ($(Ro)_s$ = tube outside diameter)

$(Ri)_s$    12.95 mm    ($(Ri)_s$ = tube inside diameter)

Giving a length of 216 mm.

The boost charge sticks 21 fit into the area left free by the sustain tubes 20. In order that the outside clearance radius (Ro) be less than $(Ro)_s /(1 + \sqrt{2})^2$, sticks 21 have a six pointed 'snowflake' section. The burning surface area of this is

As  =  N    $2(Ro - R_1) + 2w$

where w  is the web N  the number of points

and    $R_1 = w/\tan\theta$

where $\theta = \frac{180}{N}$

With nine boost sticks 21, 21a 220 mm in length and 14 mm mean diameter, the preferred web thicknesses are 1.6 mm for the sticks 21 and 1.825 mm for the sticks 21a.

As for the construction of the rocket of Figure 1, the fins 12 are curved and folded close to the nozzle so that the rocket fits within a launcher tube. On motor ejection from the launch tube the fins are self erected and lock into position. A slight cant is built into each fin to impart a slow roll to the projectile.

The nozzle assembly 13 has convergent and throat sections, which have an inner profile chrome plated to withstand the errosive effects of both burning stages, and an exit cone. The external surfaces interface with the four fin assemblies 12 and allows operation from a 103 mm diameter launcher tube.

The exit cone is screwed to the remainder or nozzle assembly in the correct position.

The igniter 14 is an ABS plastic moulding attached by a suitable adhesive to the motor burster disc 15. Pyrotechnic powder and an initiating fuze are sealed into an igniter cannister by aluminium foil. The fuze leads pass through the base of the cannister and burster disc to the outside of the motor.

Claims

1. A rocket motor comprising a combustion chamber an exhaust nozzle situated at one end of said chamber and, disposed within said chamber, a solid rocket propellant boost phase charge and a solid rocket propellant sustain phase charge, characterised in that said boost phase charge and said sustain phase charge each comprises a plurality of propellant sticks (20,21,22) each interfitting one with another and each stick extending axially along the length of said chamber towards said nozzle, and further characterised in that the boost propellant sticks (21) are each of thin web and high ratio of surface area to propellant volume by comparison with the sustain propellant sticks (20,22).

2. A rocket motor according to claim 1 characterised in that the sustain propellant sticks comprise tubular sticks (20).

3. A rocket motor according to claim 2 characterised in that each tubular sustain propellant stick (20) has disposed therein a boost propellant stick (21a).

4. A rocket motor according to claim 1 characterised in that at least one for the boost propellant sticks (21) is of thicker web than the remaining boost propellant sticks (21).

5. .A rocket motor according to claim 1 characterised in that the burning rate at any given pressure within the combustion chamber of the boost propellant within at least two of the boost propellant sticks (21) is different.

6. A rocket propellant according to claim 1 characterised in that each of the boost propellant sticks (21) comprises a plurality of solid vanes of boost propellant extending radially from the longitudinal axis of each of said sticks.

7. A rocket propellant according to claim 6 characterised in that the number of vanes extending radially from each of the boost propellant sticks (21) is six.

*Fig.1.*

*Fig.2.*

*Fig.3.*

**EUROPEAN SEARCH REPORT**

**0142247**
Application number

EP 84 30 6317

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 922 209 (ETUDES & CONTROLES INDUSTRIELS) * page 2, line 13 - page 4, line 96; figures 6,7 * | 1,2,4, 5 | F 02 K 9/10 |
| | --- | | |
| X | DE-B-1 277 637 (CLAUSEN) * whole document * | 1,2,4-7 | |
| | --- | | |
| A | FR-A- 839 861 (SAGEB) * page 8, lines 28-55; figures 26-28,21 * | 1,2,4 | |
| | --- | | |
| A | FR-A-2 283 419 (POUDRES ET EXPLOSIFS) | | |
| | --- | | TECHNICAL FIELDS SEARCHED (Int. Cl.4) |
| A | FR-A-2 278 661 (POUDRES ET EXPLOSIFS) | | F 02 K |
| | ----- | | |

The present search report has been drawn up for all claims

| Place of search THE HAGUE | Date of completion of the search 12-12-1984 | Examiner IVERUS D. |
|---|---|---|